# EUROPEAN PATENT SPECIFICATION

(11) **EP 3 301 014 B1**
(45) Date of publication and mention of the grant of the patent: **20.10.2021**
(21) Application number: 17186135.4
(22) Date of filing: 14.08.2017
(51) Int. Cl.: B64C 3/18, B64C 3/26, B64C 9/00

(54) **AIRFOIL-SHAPED BODY HAVING COMPOSITE BASE SKIN WITH INTEGRAL HAT-SHAPED SPAR**
TRAGFLÄCHENFÖRMIGER KÖRPER MIT HÜLLE AUF VERBUNDSTOFFBASIS MIT INTEGRIERTEM HUTFÖRMIGEN HOLM
CORPS DE FORME PROFILÉE AYANT UNE PEAU DE BASE COMPOSITE COMPORTANT UN LONGERON INTÉGRAL EN FORME DE CHAPEAU

(30) Priority: 28.09.2016 US 201615278144
(43) Date of publication of application: 04.04.2018
(73) Proprietor: The Boeing Company, Chicago, IL 60606-1596 (US)
(72) Inventor: SHEPPARD, Andrew, Chicago, IL 60606-1596 (US); POOK, David A., Chicago, IL 60606-1596 (US); RAGHDO, Adnan, Chicago, IL 60606-1596 (US); TOH, Nigel K.H., Chicago, IL 60606-1596 (US); OSBORNE, Max M., Chicago, IL 60606-1596 (US)
(74) Representative: Duxbury, Stephen

(56) References cited:
- EP-A1- 2 842 867
- EP-A1- 3 037 343
- EP-A2- 2 669 186
- GB-A- 2 475 523

## Description

The technology disclosed herein generally relates to airfoil-shaped bodies for aircraft and, in particular, to wings and flight control surfaces for aircraft.

The movement of an aircraft in different directions may be controlled using flight control surfaces. For example, flight control surfaces may be used to rotate an aircraft to change pitch, roll, and yaw of the aircraft. Additionally, flight control surfaces also may be used to change the coefficient of lift of wings on an aircraft. A flight control surface may be, for example, without limitation, an aileron, an elevator, a rudder, a spoiler, a flap, a slat, an airbrake, an elevator trim, or some other suitable type of control surface.

For example, flaps are a type of high-lift device used to increase the lift of an aircraft wing at a given airspeed. Flaps are typically mounted on the wing trailing edges of a fixed-wing aircraft. These flaps are often used to reduce the stalling speed of an aircraft during phases of flight, such as, for example, without limitation, takeoff and landing. In particular, extending flaps increases the camber of the wing airfoil, which, in turn, increases the maximum lift coefficient. The camber is the difference between the top and bottom curves of the wing airfoil. The increase in the maximum lift coefficient allows the aircraft to generate a given amount of lift with a slower speed. In this manner, extending the flaps reduces the stalling speed of the aircraft.

The design of airfoil-shaped bodies such as wings and flight control surfaces must take into account multiple issues such as structural integrity, manufacturing cost, tooling simplicity, non-destructive inspection access, fitting integration, damage tolerance and repair options. It would be desirable to provide airfoil-shaped bodies having improvements that address one or more of these issues.

An aircraft wing torsion box, aircraft wing, aircraft and support member for use therein is disclosed in EP3037343 A1.

A composite control surface for an aircraft is disclosed in EP 2842867 A1.

A dual skin aerofoil structure is disclosed in GB 2475523 A.

The subject matter disclosed in detail below is directed to airfoil-shaped bodies (such as wings and flight control surfaces) comprising a base assembly made of composite material, which base assembly in turn comprises a base skin and one or more hat-shaped spars integrally formed with the base skin. (As used herein, the term "composite material" means "fiber-reinforced plastic", for example, carbon fiber-reinforced plastic.) The airfoil-shaped bodies further comprise a close-out skin that is attached to the hat-shaped spars using fasteners. The disclosed subject matter is also directed to methods for manufacturing such airfoil-shaped bodies using a resin infusion process. Airfoil-shaped bodies designed and manufactured in accordance with the present invention disclosed herein provide improvements in one or more of the following: structural integrity, manufacturing cost, tooling simplicity, non-destructive inspection access, fitting integration, damage tolerance and repair options.

The present invention relates to an airfoil-shaped body according to claim 1.

At least one of the hat-shaped spars in the airfoil-shaped body described in the preceding paragraph may have one or more of the following features: (a) a profile of the hat-shaped spar varies in a spanwise direction; (b) a thickness of a web of the hat-shaped spar varies in a spanwise direction; (c) the top of the hat-shaped spar is not parallel to the base skin; and (d) a first base angle between a web of the hat-shaped spar and the base skin is different than of a second base angle between the web of the hat-shaped spar and the base skin.

The present invention also relates to a a method of manufacturing an airfoil-shaped body according to claim 9.

The present invention also relates to an aircraft comprising the airfoil shaped body as above.

### BRIEF DESCRIPTION OF THE DRAWINGS

FIG. 1 is a diagram representing a top view of an aircraft incorporating different types of flight control surfaces.
FIG. 2 is a diagram representing an end view of a base assembly comprising a base skin and a pair of hat-shaped spars integrally formed with the base skin and indicating various chordwise dimensional parameters.
FIG. 3 is a diagram representing an end view of unassembled components of a high-lift trailing edge flap in which the base assembly has a first configuration, not covered by the present claims.
FIG. 3A is a diagram representing an end view of the beam-shaped spar surrounded by the dashed ellipse 3A seen in FIG. 3, which beam-shaped spar has forward and aft flanges and a structural noodle co-infused with the base skin.
FIG. 4 is a diagram representing an end view of unassembled components of a high-lift trailing edge flap in which the base assembly has a second configuration.
FIG. 5 is a diagram representing an end view of unassembled components of a high-lift trailing edge flap in which the base assembly has a third configuration.
FIG. 6 is a diagram representing an end view of unassembled components of a high-lift trailing edge flap in which the base assembly has a fourth configuration.
FIG. 6A is a diagram representing an end view of unassembled components of a forward portion of a high-lift trailing edge flap that has a variation from the structure depicted in FIG. 6.
FIG. 7 is a diagram representing a sectional view of partially assembled components of a flight control surface (e.g., an aileron, an elevator or a rudder) in which the base assembly has a fifth configuration, not covered by the present claims.
FIG. 8 is a diagram representing a sectional view of partially assembled components of a flight control surface (e.g., an aileron, an elevator or a rudder) in which the base assembly has a sixth configuration, not covered by the present claims.
FIG. 9 is a diagram representing a sectional view of partially assembled components of a wing spoiler in which the base assembly has a configuration similar to the sixth configuration.
FIG. 10 is a diagram showing a tooling concept for manufacturing the base assembly depicted in FIG. 6 using a resin infusion process.
FIG. 11 is a diagram showing a tooling concept for manufacturing a base assembly having a structure similar to the base assembly depicted in FIG. 7 using a resin infusion process.
FIG. 12 is a flowchart identifying some steps of a method for manufacturing an airfoil-shaped body having a hat-shaped spar with flanges co-infused with a base skin.
FIG. 13 is a block diagram identifying some components of a resin infusion system that can be used to manufacture base assemblies made of composite material.
FIG. 14 is a diagram representing an exploded sectional view of unassembled components of a high-lift trailing edge flap of the type depicted in FIG. 4 having support fittings (viewed from one side) arranged in a first fitting configuration.
FIG. 15 is a diagram representing an exploded sectional view of unassembled components of a high-lift trailing edge flap of the type depicted in FIG. 6 having support fittings (viewed from one side) arranged in a second fitting configuration.
FIG. 16 is a diagram representing an exploded sectional view of unassembled components of a flight control surface of the type depicted in FIG. 7 having support fittings (viewed from one side) arranged in a third fitting configuration.

Reference will hereinafter be made to the drawings in which similar elements in different drawings bear the same reference numerals.

### DETAILED DESCRIPTION

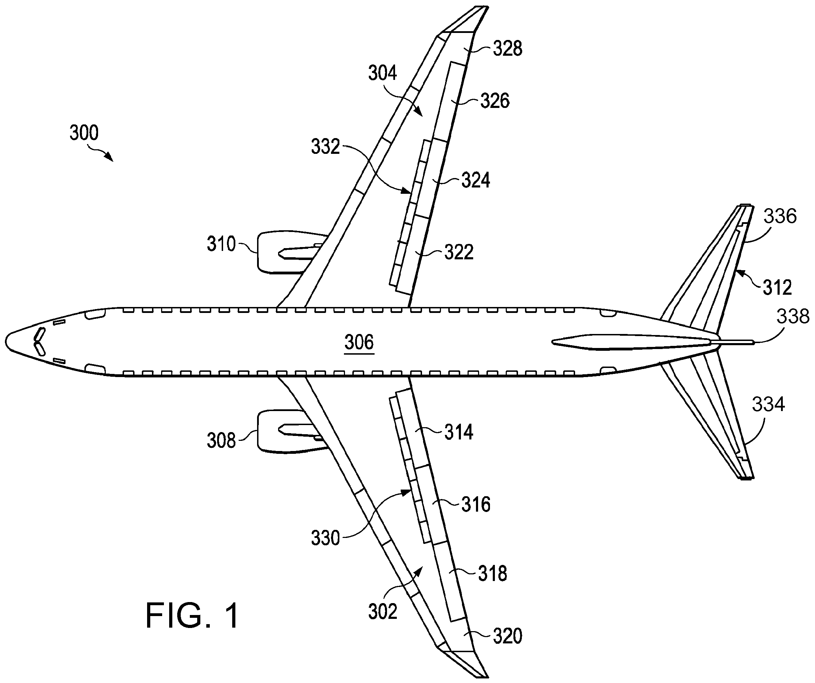

FIG. 1 is a diagram representing a top view of an aircraft 300 having different types of flight control surfaces. Aircraft 300 has wings 302 and 304 attached to a fuselage 306. Aircraft 300 includes a left wing-mounted engine 308, a right-wing-mounted engine 310, and a tail 312 comprising horizontal and vertical stabilizers. As depicted in this example, aircraft 300 also includes the following flight control surfaces: flaps 314 and 316 and aileron 318 associated with the trailing edge 320 of wing 302; flaps 322 and 324 and aileron 326 associated with the trailing edge 328 of wing 304; elevators 334 and 336 associated with the horizontal stabilizer; and a rudder 338 associated with the vertical stabilizer. Additionally, in the example depicted in FIG. 1, spoilers 330 are associated with wing 302 and spoilers 332 are associated with wing 304. In other examples, other control surfaces in addition to and/or in place of the ones shown in FIG. 1 may be associated with an aircraft.

One or more of the different types of flight control surfaces depicted in FIG. 1 may be comprise a composite base skin and one or more composite hat-shaped spars integrally formed with the base skin. However, the concepts disclosed herein are not limited in their application to flight control surfaces, but rather may also find application in the manufacture of wings and tails of an aircraft.

As used herein, the term "airfoil-shaped body" means a cambered structure comprising leading and trailing edges connected by top and bottom surfaces, the leading edge being the point at the front of the structure that has maximum curvature and the trailing edge being the point of maximum curvature at the rear of the structure. Camber is the asymmetry between the top and bottom surfaces. As used herein, the terms "forward" and "aft", when used in conjunction to characterize a pair of elements of an airfoil-shaped body, indicate that one element of the pair (i.e., the "forward" element) is closer to the leading edge than is the other element of the pair (i.e., the "forward" element). Conversely, the aft element is closer to the trailing edge than is the forward element.

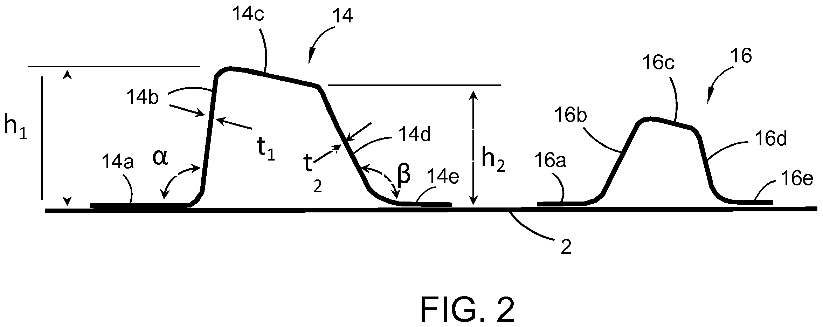

FIG. 2 is a diagram representing an end view of a base assembly comprising a base skin 2 made of composite material and a pair of hat-shaped spars 14 and 16 (also made of composite material) integrally formed with the base skin 2. As seen in FIG. 2, each of the hat-shaped spars 14 and 16 has an asymmetric profile. Each asymmetric profile may vary in size and shape in the spanwise direction, which variations are not shown in FIG. 2. The hat-shaped spar 14 comprises a forward flange 14a and an aft flange 14e integrally formed with the base skin 2, a top 14c, a forward web 14b that connects the forward flange 14a to the top 14c by way of respective radiused surfaces, and an aft web 14d that connects the aft flange 14e to the top 14c by way of respective radiused surfaces. In the example depicted in FIG. 2, the top 14c of hat-shaped spar 14 is not parallel to the underlying portion of the base skin 2 (which may not be planar). Similarly, the hat-shaped spar 16 comprises a forward flange 16a and an aft flange 16e integrally formed with the base skin 2, a top 16c, a forward web 16b that connects the forward flange 16a to the top 16c by way of respective radiused surfaces, and an aft web 16d that connects the aft flange 16e to the top 16c by way of respective radiused surfaces. In the example depicted in FIG. 2, the top 16c of hat-shaped spar 16 is not parallel to the underlying portion of the base skin 2.

The flanges, webs and tops depicted in FIG. 2 may be planar surfaces connected by radiused surfaces. For the sake of clarity, FIG. 2 shows gaps between the flanges and the base skin 2. However, it should be appreciated that in the airfoil-shaped bodies disclosed herein, there are no such gaps. On the contrary, the flanges (which are made of composite material) are integrally formed with the base skin 2 (which is also made of composite material). It should also be appreciated that the base assembly depicted in FIG. 2 may be arranged so that the base skin 2 forms either the top surface or bottom surface of the airfoil-shaped body.

FIG. 2 also indicates various chordwise dimensional parameters of the hat-shaped spar 14. The hat-shaped spar 16 has similar dimensional parameters. In FIG. 2, h₁ indicates the forward height of hat-shaped spar 14; h₂ indicates the aft height of hat-shaped spar 14; t₁ indicates the thickness of forward web 14b; t₂ indicates the thickness of aft web 14d; α indicates the forward base angle between forward flange 14a and forward web 14b; and β indicates the aft base angle between aft flange 14e and aft web 14d. The heights are measured relative to the closest surface of the base skin 2.

The reference to a "hat-shaped spar" means a structure comprising forward and aft flanges, a top, and forward and aft webs that respectively connect the forward and aft flanges to the top. In any given plane perpendicular to the spanwise direction, the flanges may be co-planar or not; the top may be parallel to the base skin or not (i.e., the heights h₁ and h₂ may be equal or not); the base angles α and β may be equal or unequal; the thicknesses t₁ and t₂ may be equal or unequal. In addition, all of these geometric relationships and dimensions may vary in the spanwise direction.

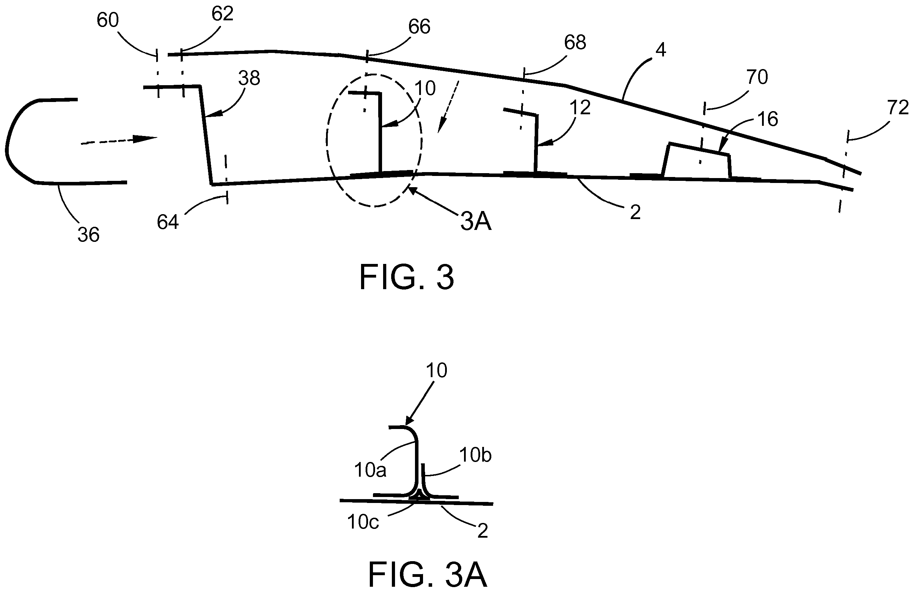

The high-lift trailing edge flap will now be described with reference to FIGS. 3 through 6. Each of these flaps comprises a base assembly made of composite material.

FIG. 3 represents an end view of unassembled components of a high-lift trailing edge flap in which the base assembly has a first configuration. The base assembly comprises a base skin 2 made of laminated composite material, with a forward portion of the base skin being formed into an forward inverted L-shaped spar 38. The base assembly further comprises a forward beam-shaped spar 10, an intermediate beam-shaped spar 12 and an aft hat-shaped spar 16, each made of laminated composite material and each having flanges integrally formed (i.e., co-infused) with base skin 2.

The flap components depicted in FIG. 3 further include a close-out skin 4 fabricated from laminated composite material or stamped thermoplastic material. In alternatives, the close-out skin may comprise pre-preg composite material panelized with honeycomb composite material. As used herein, "pre-preg" means a woven or braided fabric or cloth-like tape material, e.g., fiberglass or carbon fibers, that has been impregnated with an uncured or partially cured resin, which is flexible enough to be formed into a desired shape, then "cured," e.g., by the application of heat in an oven or an autoclave, to harden the resin into a strong, rigid, fiber-reinforced structure.

In FIG. 3, the close-out skin 4 can be attached to the base assembly by five pluralities of fasteners. Each plurality of fasteners may be arranged as a respective row of fasteners spaced apart at intervals in the spanwise direction (i.e., into the page as seen in FIG. 3). The convention has been adopted in the drawings that dash-dot lines (as used herein, the term "dash-dot line" means a linear arrangement of one or more dots and one or more dashes) represent respective pluralities (i.e., rows) of spaced fasteners. Consequently, the reference numbering convention is adopted in this detailed description that each short dash-dot line labeled with the reference number X symbolizes a corresponding plurality of fasteners X.

Applying the foregoing conventions, FIG. 3 shows that the close-out skin 4 will be attached to the top of the forward inverted L-shaped spar 38 by a plurality of fasteners 62, to the top of the forward beam-shaped spar 10 by a plurality of fasteners 66, to the top of the intermediate beam-shaped spar 12 by a plurality of fasteners 68, and to the top of the aft hat-shaped spar 16 by a plurality of fasteners 70. In addition, the trailing edge of the close-out skin 4 will be attached to the trailing edge of the base skin 2 by a plurality of fasteners 72 to form the trailing edge of the flap.

The flap components depicted in FIG. 3 further include a nose 36 fabricated from laminated composite material or stamped thermoplastic material. One portion of nose 36 will be attached to the top of the forward inverted L-shaped spar 38 by a plurality of fasteners 60, while another portion of nose 36 will be attached to the base skin 2 by a plurality of fasteners 64.

FIG. 3A is a diagram representing an end view of the forward beam-shaped spar 10 seen in FIG. 3. The forward beam-shaped spar 10 comprises a first composite laminate 10a that includes a forward flange, a top, and a first web connected to the forward flange and to the top by respective radiused area; a second composite laminate 10b that includes an aft flange and a second web connected by a radiused area, and a structural noodle 10c (a.k.a. "radius filler") made of composite material or partially cured adhesive that fills the gap between the radiused areas at the forward and aft flanges in order to provide additional structural reinforcement to that region. For the purpose of illustration, these parts of the forward beam-shaped spar 10 are shown separated by gaps. However, in actuality the webs of the composite laminates 10a and 10b are co-infused with each other with no gap therebetween, while the flanges of the composite laminates 10a and 10b and the noodle 10c are co-infused with the base skin 2 with no gap therebetween. The intermediate beam-shaped spar 12 seen in FIG. 3 is fabricated in a similar fashion.

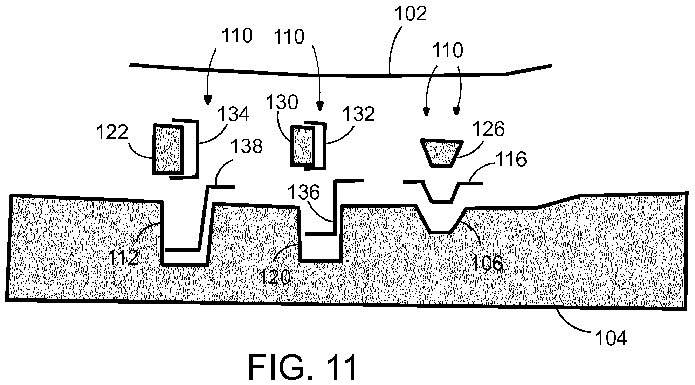

Each beam-shaped spar may comprise a first composite laminate that includes a forward flange, a top, and a first web connected to the forward flange and to the top by respective radiused areas; a second composite laminate that includes an aft flange, a top, and a second web connected to the aft flange and to the top by respective radiused areas, and a structural noodle 10c (a.k.a. "radius filler") made of composite material that fills the gap between the radiused areas at the forward and aft flanges. The webs of the first and second composite laminates may be fused together, as are the tops. A tooling concept for the fabrication of a base assembly having beam-shaped spars in accordance with this alternative construction will be described later with reference to FIG. 11.

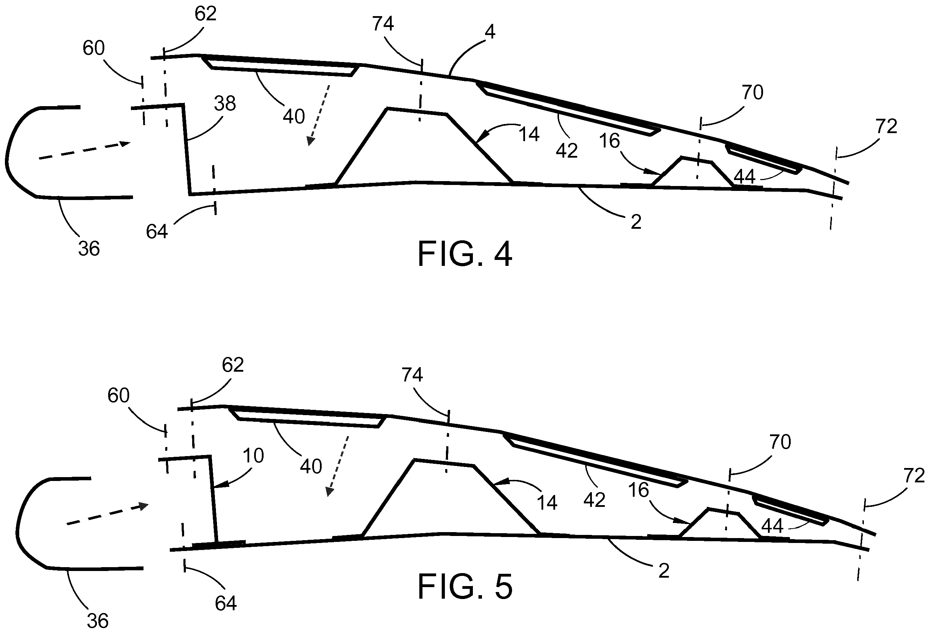

FIG. 4 is a diagram representing an end view of unassembled components of a high-lift trailing edge flap in which the base assembly has a second configuration. The base assembly comprises a base skin 2 made of laminated composite material, with a forward portion of the base skin being formed into an forward inverted L-shaped spar 38. The base assembly further comprises an intermediate hat-shaped spar 14 and an aft hat-shaped spar 16, each made of laminated composite material and each having flanges integrally formed (i.e., co-infused) with base skin 2.

The flap components depicted in FIG. 4 further include a close-out skin 4 comprising pre-preg composite material with honeycomb panels 40, 42 and 44 made of composite material attached thereto. In FIG. 4, the close-out skin 4 will be attached to the base assembly by four pluralities of fasteners. Applying the previously adopted conventions, FIG. 4 shows that the close-out skin 4 will be attached to the top of the forward inverted L-shaped spar 38 by a plurality of fasteners 62, to the top of the intermediate hat-shaped spar 14 by a plurality of fasteners 74, and to the top of the aft hat-shaped spar 16 by a plurality of fasteners 70. In addition, the trailing edge of the close-out skin 4 will be attached to the trailing edge of the base skin 2 by a plurality of fasteners 72 to form the trailing edge of the flap. In the assembled state, honeycomb panel 40 is disposed between the top of the forward inverted L-shaped spar 38 and the top of the hat-shaped spar 14; honeycomb panel 42 is disposed between the tops of the hat-shaped spars 14 and 16; and honeycomb panel 44 is disposed between the top of the hat-shaped spar 16 and the trailing edge of the flap.

The flap components depicted in FIG. 4 further include a nose 36 fabricated from laminated composite material or stamped thermoplastic material. One portion of nose 36 will be attached to the top of the forward inverted L-shaped spar 38 by a plurality of fasteners 60, while another portion of nose 36 will be attached to the base skin 2 by a plurality of fasteners 64.

FIG. 5 is a diagram representing an end view of unassembled components of a high-lift trailing edge flap in which the base assembly has a third configuration. The primary difference between the second and third configurations of the base assembly is that the third configuration incorporates a forward beam-shaped spar 10 of the type shown in FIG. 3 co-infused with the base skin 2, instead of an forward inverted L-shaped spar 38 formed as part of the base skin 2.

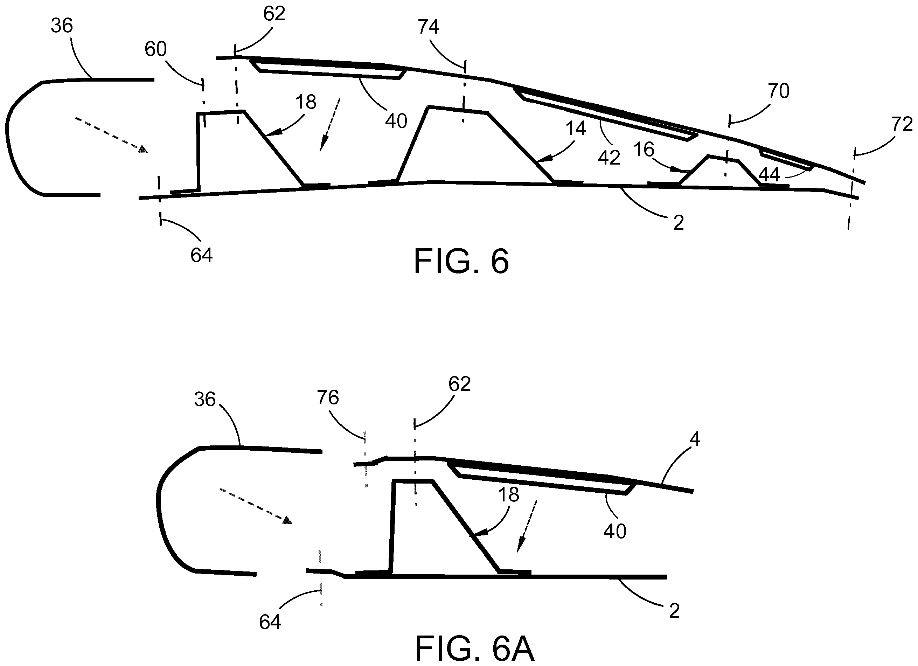

FIG. 6 is a diagram representing an end view of unassembled components of a high-lift trailing edge flap in which the base assembly has a fourth configuration. The primary difference between the third and fourth configurations of the base assembly is that the fourth configuration incorporates a forward hat-shaped spar 18 co-infused with the base skin 2 (as shown in FIG. 6), instead of a forward beam-shaped spar 10 of the type shown in FIG. 5.

FIG. 6A is a diagram representing an end view of unassembled components of a forward portion of a high-lift trailing edge flap that has a variation from the structure depicted in FIG. 6. The variation is that the close-out skin 4 is extended forward beyond the top of the forward hat-shaped spar 18 and the nose 36 will be attached to that forward extension of close-out skin 4 by a plurality of fasteners 76, instead of being attached to the top of the forward hat-shaped spar 18 as seen in FIG. 6.

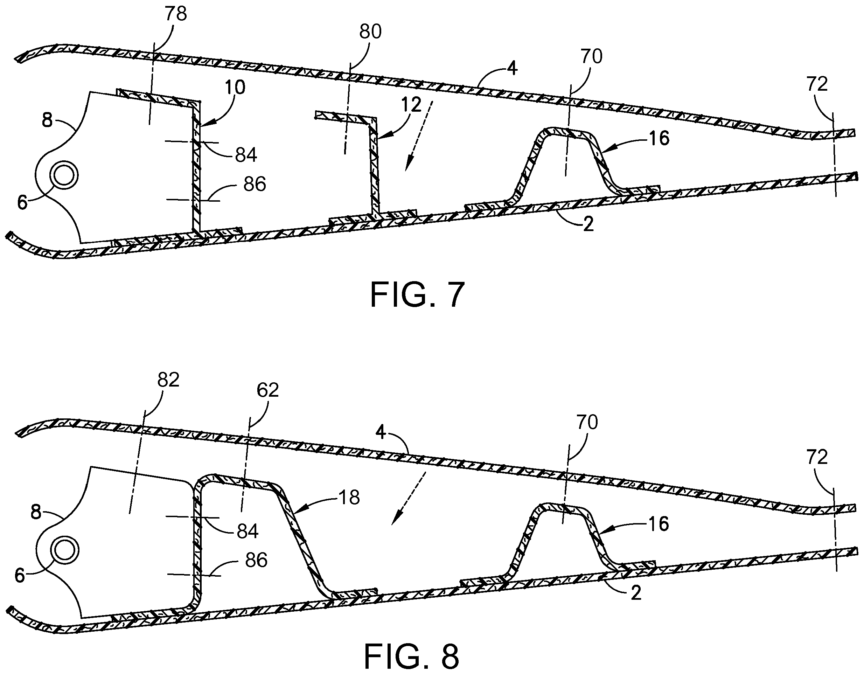

Flight control surfaces, for use as an aileron, an elevator or a rudder, will now be described with reference to FIGS. 7 and 8. Each of these flight control surfaces comprises a base assembly made of composite material. However, the respective base assemblies have different configurations as described in some detail below.

FIG. 7 is a diagram representing a sectional view of partially assembled components of a flight control surface (e.g., an aileron, an elevator or a rudder) in which the base assembly has a fifth configuration. The base assembly comprises a base skin 2 made of laminated composite material. The base assembly further comprises a forward beam-shaped spar 10, an intermediate beam-shaped spar 12 and an aft hat-shaped spar 16, each made of laminated composite material and each having flanges integrally formed (i.e., co-infused) with base skin 2. The web of the forward beam-shaped spar 10 is attached to hinge fitting 8 by a pair of fasteners 84 and 86. The hinge fitting 8 is attached to an axle 6 that can be rotated in response to activation of an actuator (not shown), thereby causing the flight control surface to rotate about the axis of hinge fitting 6.

The control surface components depicted in FIG. 7 further include a close-out skin 4 fabricated from laminated composite material or stamped thermoplastic material. The close-out skin may comprise pre-preg composite material panelized with honeycomb composite material. In FIG. 7, the close-out skin 4 will be attached to the base assembly by four pluralities of fasteners. Each plurality of fasteners may be arranged as a respective row of fasteners spaced apart at intervals in the spanwise direction. Applying the previously adopted conventions, FIG. 7 shows that the close-out skin 4 will be attached to the top of the forward beam-shaped spar 10 by a plurality of fasteners 78, to the top of the intermediate beam-shaped spar 12 by a plurality of fasteners 80, and to the top of the aft hat-shaped spar 16 by a plurality of fasteners 70. In addition, the trailing edge of the close-out skin 4 will be attached to the trailing edge of the base skin 2 by a plurality of fasteners 72 to form the trailing edge of the flight control surface.

FIG. 8 is a diagram representing a sectional view of partially assembled components of a flight control surface (e.g., an aileron, an elevator or a rudder) in which the base assembly has a sixth configuration. The base assembly comprises a base skin 2 made of laminated composite material. The base assembly further comprises a forward hat-shaped spar 18 and an aft hat-shaped spar 16, each made of laminated composite material and each having flanges integrally formed (i.e., co-infused) with base skin 2. The forward web of the forward hat-shaped spar 18 is attached to hinge fitting 8 by a pair of fasteners 84 and 86. The hinge fitting 8 is attached to an axle 6 that can be rotated in response to activation of an actuator (not shown).

The control surface components depicted in FIG. 8 further include a close-out skin 4 fabricated from laminated composite material or stamped thermoplastic material. The close-out skin may comprise pre-preg composite material panelized with honeycomb composite material. In FIG. 8, the close-out skin 4 may be attached to the base assembly by three pluralities of fasteners. More specifically, FIG. 8 shows that the close-out skin 4 will be attached to the top of the forward hat-shaped spar 18 by a plurality of fasteners 62 and to the top of the aft hat-shaped spar 16 by a plurality of fasteners 70. In addition, the trailing edge of the close-out skin 4 will be attached to the trailing edge of the base skin 2 by a plurality of fasteners 72 to form the trailing edge of the flight control surface.

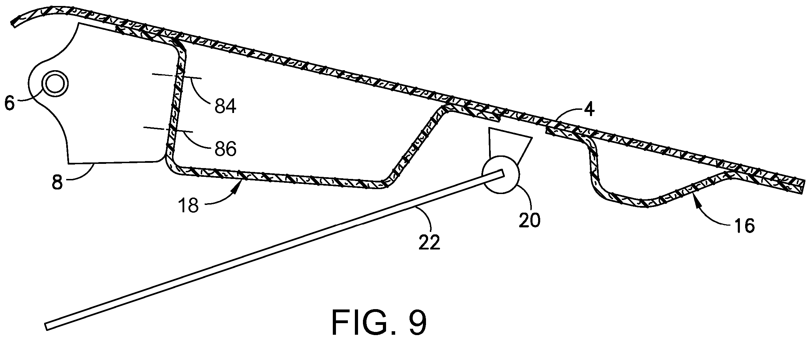

FIG. 9 is a diagram representing a sectional view of partially assembled components of a wing spoiler in which the base assembly has a configuration similar to the sixth configuration. In accordance with the sixth configuration of the base assembly shown in FIG. 8, the base skin 2 formed the lower surface of the flight control surface. In contrast, in accordance with the configuration of the base assembly shown in FIG. 9, the base skin 2 forms the upper surface of the wing spoiler.

Referring to FIG. 9, the base assembly comprises a base skin 2 made of laminated composite material. The base assembly further comprises a forward hat-shaped spar 18 and an aft hat-shaped spar 16, each made of laminated composite material and each having flanges integrally formed (i.e., co-infused) with base skin 2. The wing spoiler components depicted in FIG. 9 further include an actuator fitting 20 that will be attached to the base skin 4 and an actuator 22 (e.g., a hydraulic actuator) having a distal end that is rotatably coupled to the actuator fitting 20. The forward web of the forward hat-shaped spar 18 is attached to hinge fitting 8 by a pair of fasteners 84 and 86. The hinge fitting 8 is attached to an axle 6 that can be rotated in response to activation of the actuator 22, thereby causing the wing spoiler to rotate.

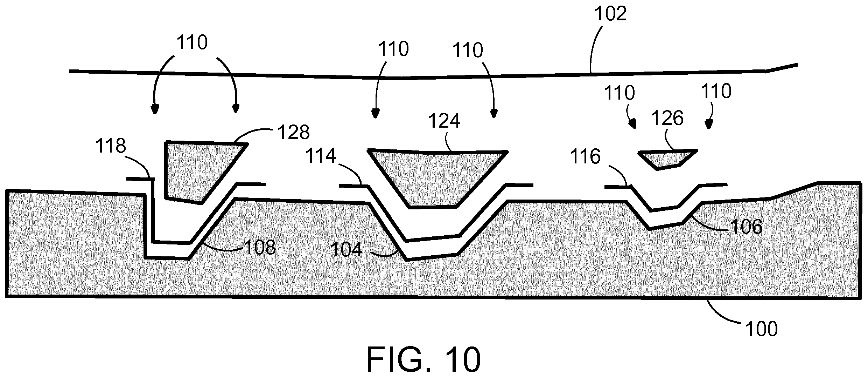

FIG. 10 is a diagram showing a tooling concept for manufacturing the base assembly depicted in FIG. 6 using a resin infusion process. The tooling comprises a base tool 100 having three concavities 104, 106 and 108 configured to mold composite material into respective hat-shaped spars. A plurality of plies of fabric 114 are laid on the surface of the base tool 100 such that major portions of those plies lie in the concavity 104. Then a mandrel 124 is placed in the concavity 104 on top of the plurality of plies of fabric 114. Another plurality of plies of fabric 116 are laid on the surface of the base tool 100 such that major portions of those plies lie in the concavity 106. Then a mandrel 126 is placed in the concavity 106 on top of the plurality of plies of fabric 116. A third plurality of plies of fabric 118 are laid on the surface of the base tool 100 such that major portions of those plies lie in the concavity 108. Then a mandrel 128 is placed in the concavity 108 on top of the plurality of plies of fabric 118. Noodles 110 are then placed adjacent to the portions of the fabric plies that will form the radiused sections connecting the flanges of the hat-shaped spars to the associated webs of the hat-shaped spars. Some applications may require the addition of one or more fabric plies to be wrapped around mandrels 124, 126 and 128 prior to these mandrels being placed in the cavities of the base tool 100 depicted in FIG. 10. Thereafter a plurality of plies of fabric 102 are overlaid on the base tool 100 and mandrels 124, 126 and 128. This plurality of plies of fabric 102 will become part of the base skin of the base assembly to be formed.

After the plurality of plies of fabric 102 have been laid down, a caul plate (not shown in FIG. 10) is placed over the plurality of plies of fabric 102. Preferably the caul plate has a surface that matches the desired outer surface of the base skin to be formed. A vacuum bag (not shown in FIG. 10) is then place over the caul plate. The periphery of the vacuum bag is sealed to the base tool 100 using sealing tape, thereby forming an evacuation chamber underneath the vacuum bag. The pressure inside the evacuation chamber is then reduced to a specified vacuum pressure. Resin is then infused into the pluralities of plies of fabric 102, 114, 116 and 118. The resin-infused fabric is then left to cure under vacuum pressure for a specified duration of time. After curing, the vacuum bag, caul plate and mandrels are removed (the mandrels may be of the dissolvable type). The final product will be a base assembly having hat-shaped spars whose flanges are co-infused with a base skin, such as the base assembly depicted in FIG. 6.

FIG. 11 is a diagram showing a tooling concept for manufacturing a base assembly having a structure similar to the base assembly depicted in FIG. 7 using a resin infusion process. The tooling comprises a base tool 100 having three concavities 106, 112 and 120. The concavity 106 is configured to mold composite material into a hat-shaped spar; the concavities 112 and 120 are configured to mold composite material into respective beam-shaped spars. A plurality of plies of fabric 116 are laid on the surface of the base tool 100 such that major portions of those plies lie in the concavity 106. Then a mandrel 126 is placed in the concavity 106. Another plurality of plies of fabric 138 are laid on the surface of the base tool 100 such that major portions of those plies lie in the concavity 112. In addition, a plurality of plies of fabric 134 are wrapped around three sides of a mandrel 122. Then the mandrel 122 and plurality of plies of fabric 134 are placed in the concavity 112 on top of the plurality of plies of fabric 138. Another plurality of plies of fabric 136 are laid on the surface of the base tool 100 such that major portions of those plies lie in the concavity 120. In addition, a plurality of plies of fabric 132 are wrapped around three sides of a mandrel 130. Then the mandrel 130 and plurality of plies of fabric 132 are placed in the concavity 120 on top of the plurality of plies of fabric 136. Noodles 110 are then placed adjacent to the portions of the fabric plies that will form the radiused sections connecting the flanges of the hat-shaped spar to the associated webs and adjacent to the portions of the fabric plies that will form the radiused sections connecting the flanges of the hat-shaped spars to the associated webs. Thereafter a plurality of plies of fabric 102 are overlaid on the base tool 100 and mandrels 122, 126 and 130. This plurality of plies of fabric 102 will become part of the base skin of the base assembly to be formed. Thereafter the processing steps previously described with reference to FIG. 10 are performed beginning with the placement of a caul plate over the plurality of plies of fabric 102. The final product will be a base assembly having one hat-shaped spar and two beam-shaped spars whose flanges are co-infused with a base skin, such as the base assembly depicted in FIG. 7.

The method of manufacture may comprise the following steps: placing a first plurality of plies of fabric on a surface of a base tool having a concavity configured to shape the hat-shaped spar; placing a mandrel in the concavity on top of the first plurality of plies of fabric; placing two noodles and a second plurality of plies of fabric over the mandrel and adjacent portions of the first plurality of plies of fabric; placing a caul plate over the second plurality of plies of fabric; placing a vacuum bag over the caul plate; evacuating a space between the vacuum bag and the base tool; infusing resin into the first and second pluralities of plies of fabric; and curing the infused resin.

The method of manufacture may comprise the following steps: placing a multiplicity of braids on a surface of a base tool having a concavity configured to form the hat-shaped spar; placing a mandrel in the concavity on top of the multiplicity of braids in the concavity; placing two noodles and a multiplicity of tapes over the mandrel and adjacent portions of the multiplicity of braids; placing a caul plate over the multiplicity of tapes; placing a vacuum bag over the caul plate; evacuating a space between the vacuum bag and the base tool; infusing resin into the multiplicity of braids and multiplicity of tapes; and curing the infused resin.

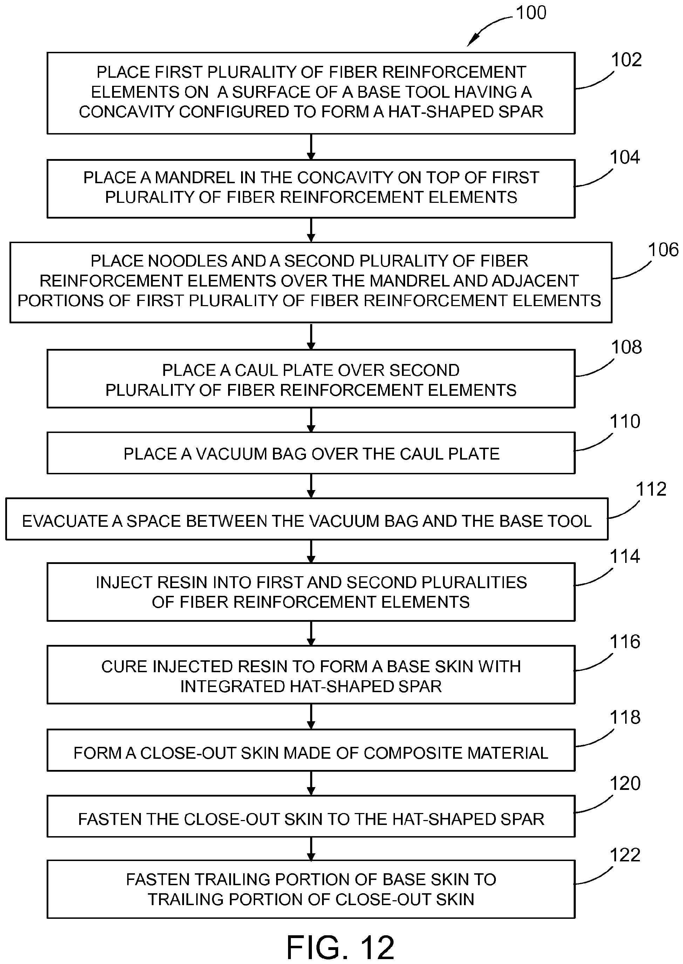

FIG. 12 is a flowchart identifying some steps of a method 100 for manufacturing an airfoil-shaped body having a hat-shaped spar with flanges co-infused with a base skin. A first plurality of fiber reinforcement elements (e.g., in the form of plies of fabric, tapes or braids) are laid on a surface of a base tool having a concavity configured to mold composite material into a hat-shaped spar (step 102). Then a mandrel is placed in the concavity on top of the first plurality of fiber reinforcement elements (step 104). Two noodles and a second plurality of fiber reinforcement elements are then laid over the mandrel and adjacent portions of the first plurality of fiber reinforcement elements (step 106). Next a caul plate is placed over the second plurality of fiber reinforcement elements (step 108). Then a vacuum bag is placed over the caul plate and sealed to the base tool (step 110). The space between the vacuum bag and the base tool is then evacuated (step 112). (As used herein, the term "to evacuate" means to reduce the pressure inside a space to a vacuum pressure greater than zero.) Resin is then injected into the first and second pluralities of fiber reinforcement elements (step 114). The injected resin is cured under vacuum pressure until a composite base skin with integrated hat-shaped spar is formed (step 116). In a separate process, a close-out skin made of composite material is formed (step 118). Then the close-out skin is fastened to the top of the hat-shaped spar (step 120). Then the trailing portion of the close-out skin is fastened to the trailing portion of the base skin to form a trailing edge of the airfoil-shaped body (step 122).

In cases where the airfoil-shaped body is a flap, the method would further comprise the step of fastening a D-shaped nose to the base and close-out skins.

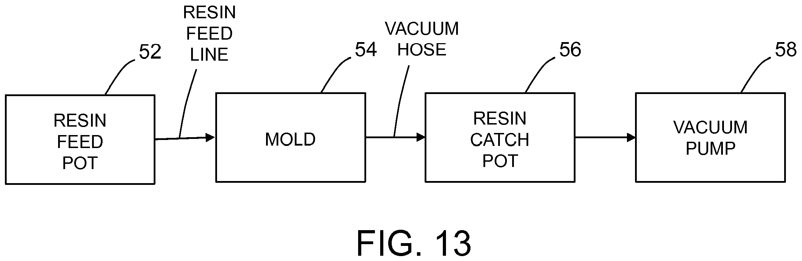

FIG. 13 is a block diagram identifying some components of a resin infusion system that can be used to manufacture base assemblies made of composite material. Resin infusion (a.k.a. vacuum resin infusion) is a technique for manufacturing high-performance, void-free composites (e.g., carbon fiber composites). In resin infusion, the reinforcement elements (e.g., plies of fabric, tapes or braids) are laid onto the base tool, e.g., mold 54 identified in FIG. 13, dry, i.e., without any resin, and then enclosed in bagging materials (such as peel ply, infusion mesh and bagging film) before being subjected to vacuum pressure using a vacuum pump, e.g., vacuum pump 58 identified in FIG. 13. After the air pressure inside the vacuum bag has been reduced to a level low enough to compress the reinforcement elements, liquid epoxy resin (mixed with hardener) is introduced into the reinforcement elements through a resin feed line, e.g., the resin feed line connecting the mold 54 to a resin feed pot as depicted in FIG. 13. This liquid epoxy resin then infuses through the reinforcement elements under the vacuum pressure. As depicted in FIG. 13, excess resin exits the mold 54 via a vacuum hose and is captured in a resin catch pot 56 that is in fluid communication with the vacuum hose and the vacuum pump 58. After the resin has fully infused through the reinforcement elements, the supply of resin is cut off and the resin is left to cure, still under vacuum pressure.

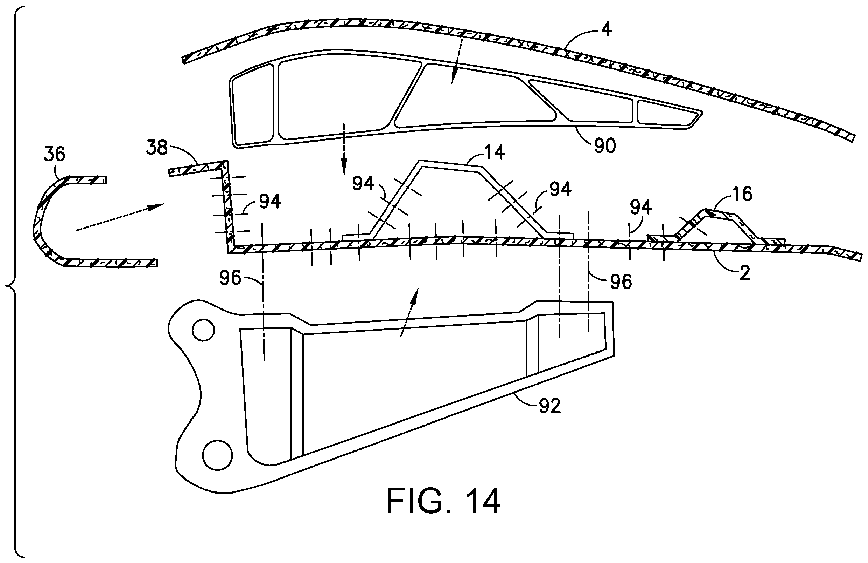

FIG. 14 is a diagram representing an exploded sectional view of unassembled components of a high-lift trailing edge flap depicted in FIG. 4 having support fittings (viewed from one side) arranged in a first fitting configuration. This first fitting configuration comprises a one-piece internal fitting 90 (which will be disposed between the base skin 2 and the close-out skin 4 in the final assembly) that extends from the web of the forward inverted L-shaped spar 38 to the forward web of the aft hat-shaped spar 16. The internal fitting 90 passes through a vertical slot formed in the webs and top of the intermediate hat-shaped spar 14 (the presence of a slot being indicated by the absence of hatching in the sectional view). Fasteners 94 for attaching flanges of the internal fitting 90 to the base assembly are indicated by dash-dot lines. The first fitting configuration further comprises a hinge fitting 92 which is coupled to an actuator (not shown). Fasteners 96 for attaching the internal fitting 90 to the hinge fitting 92 are also indicated by dash-dot lines. The fully assembled flap will rotate in tandem with the hinge fitting 92. Typically the flap incorporates at least two fitting arrangements of the type depicted in FIG. 14.

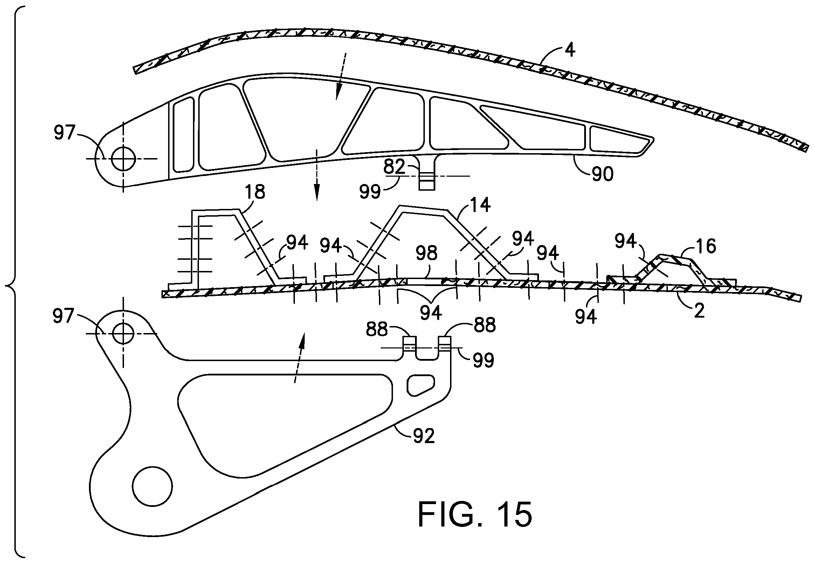

FIG. 15 is a diagram representing an exploded sectional view of unassembled components (not including nose 36) of a high-lift trailing edge flap depicted in FIG. 6 having support fittings (viewed from one side) arranged in a second fitting configuration. This second fitting configuration comprises a one-piece internal fitting 90 that extends from the web of the forward hat-shaped spar 18 to the forward web of the aft hat-shaped spar 16. The internal fitting 90 passes through a vertical slot formed in the forward and aft webs and top of the intermediate hat-shaped spar 14 and through a vertical slot formed in the aft web and top of the forward hat-shaped spar 18 (the presence of those slots being indicated by the absence of hatching in the sectional view). Fasteners 94 for attaching flanges of the internal fitting 90 to the base assembly are indicated by dash-dot lines. The second fitting configuration further comprises a hinge fitting 92 which is coupled to an actuator (not shown). At two locations, large-diameter bolts 97 and 99 (indicated by dash-dot lines) are used to attach the internal fitting 90 to the hinge fitting 92. For example, as seen in FIG. 15, a lug 82 of the internal fiitting 90 is passed through an opening 98 in the base skin 2 and coupled to a clevis joint 88 of the hinge fitting 92 by means of bolt 99. The fully assembled flap will rotate in tandem with the hinge fitting 90. Typically the flap incorporates at least two fitting arrangements of the type depicted in FIG. 15.

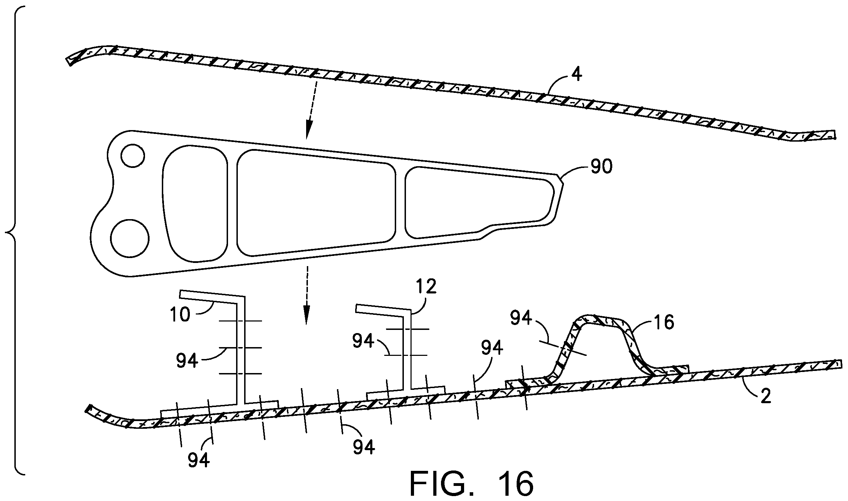

FIG. 16 is a diagram representing an exploded sectional view of unassembled components of a flight control surface depicted in FIG. 7 having support fittings (viewed from one side) arranged in a third fitting configuration. This third fitting configuration comprises a one-piece internal fitting 90 that extends from the web of the forward beam-shaped spar 10 to the forward web of the aft hat-shaped spar 16. The internal fitting 90 passes through a vertical slot formed in the web and top of the intermediate beam-shaped spar 12 and through a vertical slot formed in the web and top of the forward beam-shaped spar 10 (the presence of those slots being indicated by the absence of hatching in the sectional view). Fasteners 94 for attaching the internal fitting 90 to the base assembly are indicated by dash-dot lines. Typically the flight control surface incorporates at least two fitting arrangements of the type depicted in FIG. 16.

In examples having multiple integrated hat-shaped spars, the hat-shaped spars may have irregular base angles, allowing tailoring of the section to integrate with load introduction fittings and component loft requirements. The hat-shaped spars can have cross-sectional shape tailoring in the spanwise direction and the section thickness can be tailored in the spanwise and chordwise directions dependent on structural requirements.

The examples depicted in FIGS. 3 through 9 provide: (a) reduced manufacturing cost through reduced detail part and fastener count compared to current practice; (b) simpler tooling; (c) greater access for easier non-destructive inspection; (d) better fitting integration; and (e) simpler repair options compared to current practice. The simple tooling concepts depicted in FIGS. 10 and 11 provide tooled spar interfaces to minimize assembly shim.

Furthermore, each example depicted in FIGS. 3 through 9 has a main load loop "bathtub" featuring spanwise spar stiffening. When combined with the close-out skin, the assembly is highly efficient in reacting spanwise bending and torsion, which are the main loading modes for a trailing edge flap or flight control surface. Due to this structural efficiency, significantly fewer chordwise ribs are required compared to designs with stringer stiffened skins.

The main load loop "bathtub" can be co-cured in a single piece, which reduces the number of fasteners required in the component assembly. Less fastening (and associated weight driving fastened joint design requirements) allows greater structural efficiency to be gained from the whole component. Co-curing the "bathtub" produces bonded joints with enhanced structural properties compared to co-bonded or secondary bonded joints.

The multi-spar designs depicted in FIGS. 3-9 provide redundancy for the co-cured joints to enable the design to be damage tolerant for any single failure of a continuous co-cured joint, assuming a complete bond failure between arrestment features.

In addition, the examples depicted in FIGS. 3-9 feature a small hat-shaped spar close to the trailing edge skin close-out. This small hat-shaped trailing edge close-out spar is integrated into the base skin and hence can be placed in close proximity to the trailing edge skin close-out joint. This aft spar location maximizes the size of the main load loop and also reduces the trailing edge close-out joint loads, which helps simplify the design of this secondary structure close-out. The enclosed cross section of the close-out (i.e., aft) hat-shaped spar provides good torsional stiffness, which is beneficial in reducing loads and deflections at the flexible trailing edge close-out joint. The trailing edge skin close-out joint can be designed reliably with simple double flush rivets because the joint is outside the main load loop.

The hat-shaped spars integrated with the base skin in the examples depicted in FIGS. 4-6 and 8 provide multiple bonded joints which stabilize the base skin and allow for a minimum weight skin. The close-out skin is a relatively simple curved detail part which can be fabricated from CFRP solid laminate, honeycomb panelized pre-preg or stamped thermoplastic, with selection based on the minimum cost/weight solution.

The method claims set forth hereinafter should not be construed to require that the steps recited therein be performed in alphabetical order (any alphabetical ordering in the claims is used solely to facilitate the referencing of previously recited steps) or in the order in which they are recited. For example, a base assembly and a close-out skin may be formed in sequence or concurrently or the respective forming processes may be partially overlapping in time. In cases of sequential formation, one of the base assembly and close-out skin can be formed before the other.

## Claims

1. An airfoil-shaped body comprising:
a base skin (2) made of composite material;
a first hat-shaped spar (14) made of composite material and comprising a forward flange (14a) and an aft flange (14e) integrally formed with the base skin (2), a top (14c), a forward web (14b) that connects the forward flange (14a) to the top (14c), and an aft web (14d) that connects the aft flange (14e) to the top (14c);
a close-out skin (4); and
a first plurality of fasteners (74) by which the close-out skin (4) is attached to the top (14c) of the first hat-shaped spar (14),
a second hat-shaped spar (16) made of composite material and comprising a forward flange (16a) and an aft flange (16e) integrally formed with the base skin (2), a top (16c), a forward web (16b) that connects the forward flange (16a) to the top (16c), and an aft web (16d) that connects the aft flange (16e) to the top (16c), and
a second plurality of fasteners (70) by which the close-out skin (4) is attached to the top (16c) of the second hat-shaped spar (16),
wherein the close-out skin (4) comprises a first laminate made of composite material,
wherein the close-out skin (4) further comprises:
a first honeycomb panel (42) made of composite material and integrated with the first laminate; and
a second laminate made of composite material and integrated with the first honeycomb panel (42),
wherein the first honeycomb panel (42) overlies a first space between the first and second hat-shaped spars (14,16).

2. The airfoil-shaped body according to claim 1, wherein a profile of the first hat-shaped spar (14) varies in a spanwise direction, and/or wherein a thickness of the forward web (14b) of the first hat-shaped spar (14) varies in a spanwise direction.

3. The airfoil-shaped body as recited in any preceding claim, wherein the top (14c) of the first hat-shaped spar (14) is not parallel to the base skin (2).

4. The airfoil-shaped body as recited in any preceding claim, wherein a first base angle between the forward web (14b) of the first hat-shaped spar (14) and the base skin (2) is different than a second base angle between the aft web (14d) of the first hat-shaped spar (14) and the base skin (2).

5. The airfoil-shaped body as recited in any of the preceding claims, further comprising a nose (36) and a third plurality of fasteners (64) by which the nose (36) is attached to the base skin (2).

6. The airfoil-shaped body as recited in any of the preceding claims further comprising a hinge fitting (92), an internal fitting (90) attached to the hinge fitting (92), a plurality of fasteners (94) by which the second hat-shaped spar (16) is attached to the internal fitting (90), and a plurality of fasteners by which the close-out skin (4) is attached to the internal fitting (90).

7. The airfoil-shaped body as recited in any of the preceding claims further comprising a plurality of fasteners (72) by which a trailing portion of the close-out skin (4) is attached to a trailing portion of the base skin (2) to form a trailing edge of the airfoil-shaped body, wherein the close-out skin (4) further comprises:
a second honeycomb panel (44) made of composite material and integrated with the first laminate; and
a third laminate made of composite material and integrated with the second honeycomb panel (44),
wherein the second honeycomb panel (44) overlies a second space between the first hat-shaped spar (14) and the trailing edge.

8. The airfoil-shaped body as recited in claim 1 further comprising:
a hinge fitting (92);
an internal fitting (90) attached to the hinge fitting (92);
a forward spar (18) made of composite material and comprising a forward flange and an aft flange integrally formed with the base skin; and
a plurality of fasteners (94) by which the forward spar is attached to the internal fitting.

9. A method of manufacturing an airfoil-shaped body, comprising:
(a) forming a base assembly made of composite material using a resin infusion process, the base assembly comprising a base skin (2), a first hat-shaped spar (14) having a forward flange and an aft flange integrally formed with the base skin, a top, a forward web that connects the forward flange to the top, and an aft web that connects the aft flange to the top and a second hat-shaped spar (16) having a forward flange and an aft flange integrally formed with the base skin, a top, a forward web that connects the forward flange to the top, and an aft web that connects the aft flange to the top;
(b) forming a close-out skin (4);
(c) fastening the close-out skin (4) to the top of the first and second hat-shaped spars; and
(d) fastening a trailing portion of the base skin to a trailing portion of the close-out skin,
wherein the close-out skin comprises a first laminate made of composite material,
wherein the close-out skin further comprises:
a first honeycomb panel made of composite material and integrated with the first laminate; and
a second laminate made of composite material and integrated with the first honeycomb panel,
wherein the first honeycomb panel overlies a first space between the first and second hat-shaped spars.

10. The method as recited in claim 9 wherein step (a) comprises:
placing a first plurality of plies of fabric on a surface of a base tool having a concavity configured to shape the hat-shaped spar;
placing a mandrel in the concavity on top of the first plurality of plies of fabric;
placing two noodles and a second plurality of plies of fabric over the mandrel and adjacent portions of the first plurality of plies of fabric;
placing a caul plate over the second plurality of plies of fabric;
placing a vacuum bag over the caul plate;
evacuating a space between the vacuum bag and the base tool;
infusing resin into the first and second pluralities of plies of fabric; and
curing the infused resin.

11. The method as recited in claim 9, wherein step (a) comprises:
placing a multiplicity of braids on a surface of a base tool having a concavity configured to form the hat-shaped spars;
placing a mandrel in the concavity on top of the multiplicity of braids in the concavity;
placing two noodles and a multiplicity of tapes over the mandrel and adjacent portions of the multiplicity of braids;
placing a caul plate over the multiplicity of tapes;
placing a vacuum bag over the caul plate;
evacuating a space between the vacuum bag and the base tool;
infusing resin into the multiplicity of braids and multiplicity of tapes; and
curing the infused resin.

12. An aircraft comprising an airfoil shaped body according to any of the preceding claims 1- 8.

## Patentansprüche

1. Tragflächenförmiger Körper, der Folgendes umfasst:
eine Basishaut (2) aus Verbundmaterial;
einen ersten hutförmigen Holm (14) aus Verbundmaterial, der Folgendes umfasst: einen vorderen Gurt (14a) und einen hinteren Gurt (14e), die einstückig mit der Basishaut (2) ausgebildet sind, ein Oberteil (14c), einen vorderen Steg (14b) der den vorderen Gurt (14a) mit dem Oberteil (14c) verbindet, und einen hinteren Steg (14d), der den hinteren Gurt (14e) mit dem Oberteil (14c) verbindet;
eine Abschlusshaut (4); und
eine erste Vielzahl von Befestigungselementen (74), durch die die Abschlusshaut (4) an dem Oberteil (14c) des ersten hutförmigen Holms (14) befestigt ist,
einen zweiten hutförmigen Holm (16) aus Verbundmaterial, der Folgendes umfasst: einen vorderen Gurt (16a) und einen hinteren Gurt (16e), die einstückig mit der Basishaut (2) ausgebildet sind, ein Oberteil (16c), einen vorderen Steg (16b) der den vorderen Gurt (16a) mit dem Oberteil (16c) verbindet, und einen hinteren Steg (16d), der den hinteren Gurt (16e) mit dem Oberteil (16c) verbindet; und
eine zweite Vielzahl von Befestigungselementen (70), durch die die Abschlusshaut (4) an dem Oberteil (16c) des zweiten hutförmigen Holms (16) befestigt ist,
wobei die Abschlusshaut (4) ein erstes Laminat aus Verbundmaterial umfasst,
wobei die Abschlusshaut (4) ferner Folgendes umfasst:
eine erste Wabenplatte (42) aus Verbundmaterial, die mit dem ersten Laminat integriert ist; und
ein zweites Laminat aus Verbundmaterial, das und mit der ersten Wabenplatte (42) integriert ist,
wobei die erste Wabenplatte (42) über einem ersten Raum zwischen den ersten und zweiten hutförmigen Holmen (14, 16) liegt.

2. Tragflächenförmiger Körper nach Anspruch 1, wobei ein Profil des ersten hutförmigen Holms (14) in Spannweitenrichtung variiert und/oder wobei eine Dicke des vorderen Stegs (14b) des ersten hutförmigen Holms (14) in Spannweitenrichtung variiert.

3. Tragflächenförmiger Körper nach einem der vorhergehenden Ansprüche, wobei das Oberteil (14c) des ersten hutförmigen Holms (14) nicht parallel zur Basishaut (2) ist.

4. Tragflächenförmiger Körper nach einem der vorhergehenden Ansprüche, wobei ein erster Basiswinkel zwischen dem vorderen Steg (14b) des ersten hutförmigen Holms (14) und der Basishaut (2) sich von einem zweiten Basiswinkel zwischen dem hinteren Steg (14d) des ersten hutförmigen Holms (14) und der Basishaut (2) unterscheidet.

5. Tragflächenförmiger Körper nach einem der vorhergehenden Ansprüche, der ferner eine Nase (36) und eine dritte Vielzahl von Befestigungselementen (64) umfasst, durch die die Nase (36) an der Basishaut (2) befestigt ist.

6. Tragflächenförmiger Körper nach einem der vorhergehenden Ansprüche, ferner umfassend einen Scharnierbeschlag (92), einen Innenbeschlag (90), der an dem Scharnierbeschlag (92) befestigt ist, eine Vielzahl von Befestigungselementen (94), durch die der zweite hutförmige Holm (16) an dem Innenbeschlag (90) befestigt ist, und eine Vielzahl von Befestigungselementen, mit denen die Abschlusshaut (4) an dem Innenbeschlag (90) befestigt ist.

7. Tragflächenförmiger Körper nach einem der vorhergehenden Ansprüche, der ferner eine Vielzahl von Befestigungselementen (72) umfasst, durch die ein hinterer Abschnitt der Abschlusshaut (4) an einem hinteren Abschnitt der Basishaut (2) befestigt ist. um eine Hinterkante des tragflächenförmigen Körpers zu bilden, wobei die Abschlusshaut (4) ferner Folgendes umfasst:
eine zweite Wabenplatte (44) aus Verbundmaterial, die mit dem ersten Laminat integriert ist; und
ein drittes Laminat aus Verbundmaterial, das mit der zweite Wabenplatte (44) integriert ist,
wobei die zweite Wabenplatte (44) über einem zweiten Raum zwischen dem ersten hutförmigen Holm (14) und der Hinterkante liegt.

8. Tragflächenförmiger Körper nach Anspruch 1, der weiterhin Folgendes umfasst:
einen Scharnierbeschlag (92);
einen an dem Scharnierbeschlag (92) befestigten Innenbeschlag (90);
einen vorderen Holm (18) aus Verbundmaterial, der einen vorderen Gurt und einen hinteren Gurt umfasst, die einstückig mit der Basishaut ausgebildet sind; und
eine Vielzahl von Befestigungselementen (94), mit denen der vordere Holm an dem Innenbeschlag befestigt ist.

9. Verfahren zur Herstellung eines tragflächenförmigen Körpers, wobei das Verfahren Folgendes umfasst:
(a) Bilden einer Basisbaugruppe aus Verbundmaterial unter Verwendung eines Harzinfusionsverfahrens, wobei die Basisbaugruppe Folgendes umfasst: eine Basishaut (2), einen ersten hutförmigen Holm (14) mit einem vorderen Gurt und einem hinteren Gurt, die einstückig mit der Basishaut ausgebildet sind, einem Oberteil, einem vorderen Steg, der den vorderen Gurt mit dem Oberteil verbindet, und einem hinteren Steg, der den hinteren Gurt mit dem Oberteil verbindet, sowie einen zweiten hutförmigen Holm (16) mit einem vorderen Gurt und einem hinteren Gurt, die einstückig mit der Basishaut ausgebildet sind, einem Oberteil, einem vorderen Steg, der den vorderen Gurt mit dem Oberteil verbindet, und einem hinteren Steg, der den hinteren Gurt mit dem Oberteil verbindet; und
(b) Bilden einer Abschlusshaut (4);
(c) Befestigen der Abschlusshaut (4) an dem Oberteil der ersten und zweiten hutförmigen Holme; und
(d) Befestigen eines hinteren Abschnitts der Basishaut an einem hinteren Abschnitt der Abschlusshaut,
wobei die Abschlusshaut ein erstes Laminat aus Verbundmaterial umfasst,
wobei die Abschlusshaut ferner Folgendes umfasst:
eine erste Wabenplatte aus Verbundmaterial, die mit dem ersten Laminat integriert ist; und
ein zweites Laminat aus Verbundmaterial, das mit der ersten Wabenplatte integriert ist,
wobei die erste Wabenplatte über einem ersten Raum zwischen den ersten und zweiten hutförmigen Holmen liegt.

10. Verfahren nach Anspruch 9, wobei der Schritt (a) Folgendes umfasst:
Anordnen einer ersten Vielzahl von Stofflagen auf einer Oberfläche eines Basiswerkzeugs mit einer Konkavität, die konfiguriert ist, um den hutförmigen Holm zu formen;
Anordnen eines Dorns in der Konkavität auf der ersten Vielzahl von Stofflagen;
Anordnen von zwei Eckfüllungen und einer zweiten Vielzahl von Stofflagen über dem Dorn und angrenzenden Abschnitten der ersten Vielzahl von Stofflagen;
Anordnen eines Pressblechs über der zweiten Vielzahl von Stofflagen;
Anordnen eines Vakuumbeutels über dem Pressblech;
Evakuieren eines Raums zwischen dem Vakuumbeutel und dem Basiswerkzeug;
Eingießen von Harz in die erste und die zweite Vielzahl von Stofflagen; und
Aushärten des eingegossenen Harzes.

11. Verfahren nach Anspruch 9, wobei der Schritt (a) Folgendes umfasst:
Anordnen einer Mehrzahl von Geflechten auf einer Oberfläche eines Basiswerkzeugs mit einer Konkavität, die konfiguriert ist, um die hutförmigen Holme zu bilden;
Anordnen eines Dorns in der Konkavität auf der Mehrzahl von Geflechten in der Konkavität;
Anordnen von zwei Eckfüllungen und einer Mehrzahl von Bändern über dem Dorn und angrenzenden Abschnitten der Mehrzahl von Geflechten;
Anordnen eines Pressblechs über der Mehrzahl von Bändern;
Anordnen eines Vakuumbeutels über dem Pressblech;
Evakuieren eines Raums zwischen dem Vakuumbeutel und dem Basiswerkzeug;
Eingießen von Harz in die Mehrzahl von Geflechten und die Mehrzahl von Bändern; und
Aushärten des eingegossenen Harzes.

12. Flugzeug mit einem tragflächenförmigen Körper nach einem der vorhergehenden Ansprüche 1 bis 8.

## Revendications

1. Corps à profil aérodynamique comprenant :
un revêtement de base (2) réalisé dans un matériau composite ;
un premier longeron en oméga (14) réalisé dans un matériau composite et comprenant une semelle avant (14a) et une semelle arrière (14e) formées d'un seul tenant avec le revêtement de base (2), une partie supérieure (14c), une âme avant (14b) reliant la semelle avant (14a) à la partie supérieure (14c), et une âme arrière (14d) reliant la semelle arrière (14e) à la partie supérieure (14c) ;
un revêtement de fermeture (4) ; et
une première pluralité de fixations (74) grâce auxquelles le revêtement de fermeture (4) est fixé à la partie supérieure (14c) du premier longeron en oméga (14) ;
un deuxième longeron en oméga (16) réalisé dans un matériau composite et comprenant une semelle avant (16a) et une semelle arrière (16e) formées d'un seul tenant avec le revêtement de base (2), une partie supérieure (16c), une âme avant (16b) reliant la semelle avant (16a) à la partie supérieure (16c), et une âme arrière (16d) reliant la semelle arrière (16e) à la partie supérieure (16c) ; et
une deuxième pluralité de fixations (70) grâce auxquelles le revêtement de fermeture (4) est fixé à la partie supérieure (16c) du deuxième longeron en oméga (16) ;
ledit revêtement de fermeture (4) comprenant un premier stratifié réalisé dans un matériau composite,
ledit revêtement de fermeture (4) comprenant en outre :
un premier panneau en nid d'abeille (42) réalisé dans un matériau composite et intégré au premier stratifié, et
un deuxième stratifié réalisé dans un matériau composite et intégré au premier panneau en nid d'abeille (42) ;
ledit premier panneau en nid d'abeille (42) recouvrant un premier espace entre les premier et deuxième longerons en oméga (14, 16).

2. Corps à profil aérodynamique selon la revendication 1, dans lequel le profil du premier longeron en oméga (14) varie dans le sens de l'envergure, et/ou dans lequel l'épaisseur de l'âme avant (14b) du premier longeron en oméga (14) varie dans le sens de l'envergure.

3. Corps à profil aérodynamique selon l'une quelconque des revendications précédentes, dans lequel la partie supérieure (14c) du premier longeron en oméga (14) n'est pas parallèle au revêtement de base (2).

4. Corps à profil aérodynamique selon l'une quelconque des revendications précédentes, dans lequel un premier angle de base entre l'âme avant (14b) du premier longeron en oméga (14) et le revêtement de base (2) est différent d'un deuxième angle de base entre l'âme arrière (14d) du premier longeron en oméga (14) et le revêtement de base (2).

5. Corps à profil aérodynamique selon l'une quelconque des revendications précédentes, comprenant en outre un nez (36) et une troisième pluralité de fixations (64) grâce auxquelles le nez (36) est fixé au revêtement de base (2).

6. Corps à profil aérodynamique selon l'une quelconque des revendications précédentes, comprenant en outre une ferrure d'articulation (92), une ferrure interne (90) fixée à la ferrure d'articulation (92), une pluralité de fixations (94) grâce auxquelles le deuxième longeron en oméga (16) est fixé à la ferrure interne (90), et une pluralité de fixations grâce auxquelles le revêtement de fermeture (4) est fixé à la ferrure interne (90).

7. Corps à profil aérodynamique selon l'une quelconque des revendications précédentes, comprenant en outre une pluralité de fixations (72) grâce auxquelles une partie de fuite du revêtement de fermeture (4) est fixée à une partie de fuite du revêtement de base (2) pour former un bord de fuite du corps à profil aérodynamique, ledit revêtement de fermeture (4) comprenant en outre :
un deuxième panneau en nid d'abeille (44) réalisé dans un matériau composite et intégré au premier stratifié, et
un troisième stratifié réalisé dans un matériau composite et intégré au deuxième panneau en nid d'abeille (44) ;
ledit deuxième panneau en nid d'abeille (44) recouvrant un deuxième espace entre le premier longeron en oméga (14) et le bord de fuite.

8. Corps à profil aérodynamique selon la revendication 1, comprenant en outre :
une ferrure d'articulation (92),
une ferrure interne (90) fixée à la ferrure d'articulation (92),
un longeron avant (18) réalisé dans un matériau composite et comprenant une semelle avant et une semelle arrière formées d'un seul tenant avec le revêtement de base, et
une pluralité de fixations (94) grâce auxquelles le longeron avant est fixé à la ferrure interne.

9. Procédé de fabrication d'un corps à profil aérodynamique, comprenant :
(a) la formation d'un ensemble de base réalisé dans un matériau composite au moyen d'un processus d'infusion de résine, l'ensemble de base comprenant un revêtement de base (2) et un longeron en oméga (14) possédant une semelle avant et une semelle arrière formées d'un seul tenant avec le revêtement de base, une partie supérieure, une âme avant reliant la semelle avant à la partie supérieure, et une âme arrière reliant la semelle arrière à la partie supérieure, et un deuxième longeron en oméga (16) possédant une semelle avant et une semelle arrière formées d'un seul tenant avec le revêtement de base, une partie supérieure, une âme avant reliant la semelle avant à la partie supérieure, et une âme arrière reliant la semelle arrière à la partie supérieure ;
(b) la formation d'un revêtement de fermeture (4) ;
(c) la fixation du revêtement de fermeture (4) à la partie supérieure des premier et deuxième longerons en oméga ; et
(d) la fixation d'une partie de fuite du revêtement de base à une partie de fuite du revêtement de fermeture ;
ledit revêtement de fermeture comprenant un premier stratifié réalisé dans un matériau composite,
ledit revêtement de fermeture comprenant en outre :
un premier panneau en nid d'abeille réalisé dans un matériau composite et intégré au premier stratifié, et
un deuxième stratifié réalisé dans un matériau composite et intégré au premier panneau en nid d'abeille ;
ledit premier panneau en nid d'abeille recouvrant un premier espace entre les premier et deuxième longerons en oméga.

10. Procédé selon la revendication 9, dans lequel l'étape (a) comprend :
la mise en place d'une première pluralité de plis d'étoffe sur une surface d'un outil de base possédant une concavité conçue pour mettre en forme le longeron en oméga ;
la mise en place d'un mandrin dans la concavité par-dessus la première pluralité de plis d'étoffe ;
la mise en place de deux baguettes de comblement et d'une deuxième pluralité de plis d'étoffe sur le mandrin et des parties adjacentes de la première pluralité de plis d'étoffe ;
la mise en place d'une plaque de conformation sur la deuxième pluralité de plis d'étoffe ;
la mise en place d'un sac à vide sur la plaque de conformation ;
l'évacuation d'un espace entre le sac à vide et l'outil de base ;
l'infusion de résine dans la première et la deuxième pluralité de plis d'étoffe ; et
la polymérisation de la résine infusée.

11. Procédé selon la revendication 9, dans lequel l'étape (a) comprend :
la mise en place d'une multiplicité de tresses sur une surface d'un outil de base possédant une concavité conçue pour former les longerons en oméga ;
la mise en place d'un mandrin dans la concavité par-dessus la multiplicité de tresses présentes dans la concavité ;
la mise en place de deux baguettes de comblement et d'une multiplicité de rubans sur le mandrin et des parties adjacentes de la multiplicité de tresses ;
la mise en place d'une plaque de conformation sur la multiplicité de rubans ;
la mise en place d'un sac à vide sur la plaque de conformation ;
l'évacuation d'un espace entre le sac à vide et l'outil de base ;
l'infusion de résine dans la multiplicité de tresses et la multiplicité de rubans ; et
la polymérisation de la résine infusée.

12. Aéronef comprenant un corps à profil aérodynamique selon l'une quelconque des revendications précédentes 1 à 8.
